# FASCICULE DE BREVET EUROPEEN

(11) **EP 1 931 963 B1**
(45) Date de publication et mention de la délivrance du brevet: **11.11.2009**
(21) Numéro de dépôt: 06808213.0
(22) Date de dépôt: 29.09.2006
(51) Int. Cl.: G01N 1/08, G01N 1/10, G01N 3/00

(54) **DISPOSITIF DE PRELEVEMENT DE MATIERES GRANULEUSES OU PULVERULENTES**
VORRICHTUNG ZUR ENTNAHME GRANULÄRER ODER PULVERIGER MATERIALPROBEN
DEVICE FOR SAMPLING GRANULAR OR POWDERED MATERIALS

(30) Priorité: 03.10.2005 FR 0510056
(43) Date de publication de la demande: 18.06.2008
(73) Titulaire: Tout pour le Grain, 89260 Perceneige (FR)
(72) Inventeur: HERMAND, André, F-89260 Perceneige (FR); HAZOUARD, Bernard, F-10100 Saint Martin de Bossenay (FR)
(74) Mandataire: Chambon, Gérard
(86) Numéro de dépôt international: PCT/FR2006/002202
(87) Numéro de publication internationale: WO 2007/039680

(56) Documents cités:
- FR-A- 2 582 630
- FR-A- 2 597 953
- FR-A- 2 633 487
- FR-A- 2 679 655
- FR-A- 2 845 364

## Description

L'invention concerne un dispositif de prélèvement de matières granuleuses ou pulvérulentes, plus particulièrement destiné aux prélèvements d'échantillons de céréales.

Il est courant de prélever des échantillons de grains et les dispositifs connus comportent généralement une potence articulée qui supporte une sonde de prélèvement destinée à être plongée dans la matière à prélever. La sonde est, par exemple, prévue pour un prélèvement gravitaire, ou par carottage, ou par aspiration, le produit ainsi prélevé étant généralement ensuite transporté par aspiration.

Un dispositif de prélèvement de ce type, particulièrement intéressant, est décrit dans le document FR-2 582 630 A.

Le dispositif de prélèvement décrit dans le brevet précité comporte un mât sur lequel est articulé au moins un bras dont l'extrémité libre porte une sonde de prélèvement tandis que ledit bras est entraîné en mouvement par la combinaison de deux moteurs distincts munis chacun d'un arbre de sortie, l'un des moteurs, dit de rotation, étant monté de manière à avoir son arbre de sortie, d'une part, sensiblement parallèle au mât et, d'autre part, solidaire en rotation avec ledit bras, et l'autre moteur dit de montée/descente, ayant son arbre de sortie disposé dans un plan sensiblement perpendiculaire audit mât.

Un tel dispositif est assez satisfaisant. Toutefois, dans ce dispositif, le bras est solidaire des deux arbres de sortie des moteurs mais si le moteur de montée/descente tourne dans un plan horizontal en même temps que le bras, il n'est par contre pas lié au mouvement de montée/descente dudit bras. Autrement dit, dans ce dispositif antérieur, le moteur de montée/descente ne suit pas le bras dans son mouvement de montée/descente.

Dans un tel cas, le moteur de montée/descente est encombrant, fait saillie et il est impossible à camoufler, sauf à le recouvrir d'un carter individuel généralement peu esthétique.

En outre, un tel dispositif nécessite un grand nombre de pièces.

C'est entre autre pourquoi l'inventeur a imaginé un dispositif du type précité mais qui est remarquable en ce que le moteur de montée/descente est monté de manière solidaire avec le bras tandis que son arbre de sortie est monté de manière bloqué en rotation axiale par rapport au mât de telle manière que ledit moteur peut osciller dans un plan sensiblement parallèle au mât, ou passant par celui-ci, en entraînant le bras dans son mouvement.

Outre une esthétique améliorée, un tel dispositif apporte de nombreux avantages en permettant de diminuer le nombre de pièces nécessaires, d'où un coût réduit et une facilité de montage.

De plus, de manière tout à fait avantageuse, le poids même du moteur de montée/descente s'ajoute au poids du bras et facilite la pénétration de la sonde dans le produit à prélever.

Un mode de réalisation dans lequel le moteur de rotation est monté fixement sur le mât et entraîne par son arbre de sortie un berceau dans lequel est monté le moteur de montée/descente, est remarquable en ce que l'arbre de sortie du moteur de montée/descente est bloqué en rotation dans ledit berceau de telle sorte que ledit moteur peut osciller dans le berceau autour de son arbre de sortie ainsi bloqué.

De préférence dans ce cas, l'arbre de sortie du moteur de montée/descente est bloqué en rotation au moyen de brides montées sur le berceau de façon légèrement flottante.

Par exemple, lesdites brides sont montées sur ledit berceau de manière flottante au moyen de semelles qui sont solidarisées aux brides et qui sont fixées sur le berceau par des boulons ajustés de manière à assurer un jeu longitudinal et latéral des semelles par rapport audit berceau.

Avantageusement, le moteur de montée/descente est disposé de manière sensiblement parallèle à l'axe longitudinal d'au moins une partie du bras et par exemple, le bras est fixé en partie sur une plaque solidarisée au moteur de montée/descente; ladite plaque et au moins une partie dudit bras et dudit moteur étant recouvertes par un carter.

Le moteur de montée/descente est ainsi protégé et camouflé par un carter faisant corps et qui est aligné en permanence avec le bras.

Selon un mode de réalisation, le bras est constitué par un conduit qui sert de conduit de transport par aspiration du produit prélevé.

D'autres moyens sont évidemment prévus tels que, par exemple, des butées pour limiter l'amplitude angulaire du mouvement oscillant du moteur de montée/descente.

L'invention sera bien comprise à la lecture de la description qui va suivre et qui se réfère aux dessins annexés dans lesquels :
- la figure 1 montre en élévation un dispositif de prélèvement complet selon l'invention, la sonde étant représentée dans deux positions, respectivement au-dessus et dans une benne de produit à prélever, ladite benne étant schématisée sur le dessin,
- la figure 2 représente l'assemblage des deux moteurs d'actionnement du bras, le mât n'étant pas représenté et le bras étant représenté partiellement,
- la figure 3 représente le moteur de montée/descente dans son berceau, en position basse,
- la figure 4 représente le moteur de rotation et le berceau support du moteur de montée/descente, ce dernier n'étant pas monté dans ledit berceau,
- la figure 5 est une vue latérale en élévation du berceau support du moteur de montée/descente.

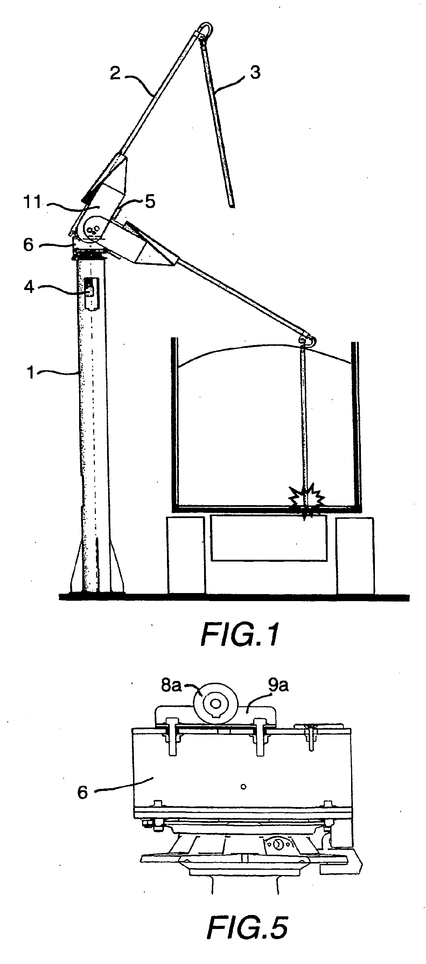

Le dispositif de prélèvement selon l'invention comme le montre bien la figure 1, comporte une potence formée d'un mât 1 et d'un bras 2 pourvu à son extrémité d'une sonde de prélèvement 3 du type canne.

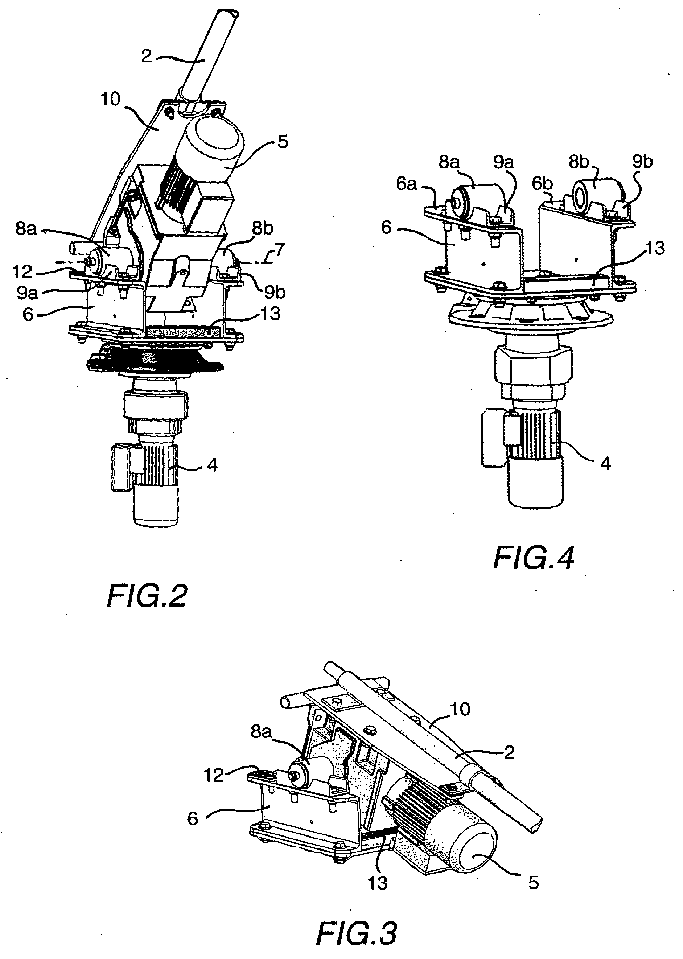

Le bras 2 peut tourner selon deux directions grâce à deux moteurs électriques, respectivement un moteur 4 de rotation et un moteur 5 de montée/descente (plus visibles sur les figures 2 et 3), avantageusement du type motoréducteurs, prévus pour permettre au bras 2 de pouvoir tourner, d'une part, autour de l'axe du mât ou d'un axe parallèle à celui-ci (au moyen du moteur 4 de rotation) et, d'autre part, dans un plan passant par le mât (au moyen du moteur 5 de monté/descente).

Le moteur 4 de rotation est ici disposé en tête du mât 1 et de manière à présenter un arbre de sortie (non visible), parallèle, voire même coaxial audit mât.

L'arbre de sortie du moteur 4 de rotation est solidaire d'un berceau 6 ou similaire comme le montrent les dessins, ledit berceau 6 étant ainsi entraîné en rotation par le moteur 4. Dans le berceau 6, est monté le moteur 5.

Comme le montre plus particulièrement la figure 2, le moteur 5 présente un arbre de sortie dont l'axe longitudinal 7 (représenté en traits mixtes sur ladite figure 2) est disposé perpendiculairement au mât 1.

L'arbre de sortie du moteur 5 est fixé dans le berceau 6 à l'aide de brides ou similaires telles que 8a, 8b (figures 2 à 5).

Les brides 8a, 8b sont destinées à fixer et bloquer en rotation l'arbre de sortie du moteur 5 de montée/descente, ledit arbre étant par exemple claveté dans lesdites brides.

Avantageusement, les brides 8a, 8b sont chacune solidaires d'une semelle 9a, 9b. Les semelles 9a, 9b sont elles-mêmes fixées sur des parties plates 6a, 6b du berceau 6, comme le montre bien en particulier la figure 4.

La fixation des semelles sur le berceau est avantageusement effectuée par boulonnage comme le montre la figure 5. Chaque boulon est ajusté dans cet exemple avec un jeu latéral et longitudinal au moyen, par exemple, d'un alésage dans la partie correspondante 6a, 6b du berceau, un peu plus grand que le diamètre de la tige du boulon et d'une entretoise légèrement plus longue que l'épaisseur de ladite partie 6a, 6b, sous la forme, par exemple comme représenté, d'une bague qui coopère avec un écrou frein, de manière à assurer un léger débattement multidirectionnel possible des semelles 9a, 9b et donc des brides 8a, 8b par rapport au berceau 6.

Ce montage flottant des brides 8a, 8b permet d'assurer un alignement constant desdites brides avec l'axe 7 de l'arbre de sortie du moteur 5 au cours de son mouvement oscillant dont il sera question ci-après.

Le bras 2 qui est, par exemple, constitué par un conduit d'aspiration du produit à prélever est fixé, comme le montrent bien les figures 2 et 3, sur une plaque 10, elle-même fixée sur le moteur 5. Le bras 2 peut être relié vers l'arrière à un circuit pneumatique d'aspiration, non représenté, et il est, par exemple, pourvu à son extrémité d'un moyen destiné à supporter de manière pendulaire la sonde 3 (figure 1).

Le moteur 5, la plaque 10 et une partie du bras 2 sont ici en outre recouverts par un carter 11 (figure 1), par exemple en matériau synthétique ou composite.

L'aspiration comme précitée ci-avant permet de transporter le produit prélevé et même, pour un prélèvement par aspiration, d'effectuer en outre ledit prélèvement.

Comme le montrent bien les dessins et en particulier les figures 2 et 3, l'axe longitudinal du moteur 5 est disposé de manière sensiblement parallèle au bras 2.

On comprend aisément que le bras 2 et la sonde 3 peuvent tourner autour du mât 1 à l'aide du moteur 4.

En outre, le bras 2 peut effectuer un mouvement de haut en bas (figure 1) grâce au moteur 5 qui oscille et qui entraîne dans son mouvement ledit bras 2 du fait que son arbre de sortie est rendu fixe par les brides 8a, 8b.

Pour limiter l'amplitude angulaire du mouvement de montée/descente du bras 2, le berceau 6 est ici pourvu de deux butées, respectivement de position haute 12 et de position basse 13 (figures 2 et 3), destinées à entrer en contact avec une partie du moteur 5 ou d'un élément fixé à celui-ci.

Les butées 12 et 13 sont ici mécaniques et limitent donc la course du moteur 5 (sous forme de motoréducteur), entraînant un arrêt ou une inversion du sens du mouvement commandé par exemple par une simple lecture d'intensité du courant d'alimentation dudit moteur. Une telle technologie peut en outre être adoptée pour constituer un contact dit « fond de benne » lorsque la sonde 3 arrive au fond du conteneur de produits à prélever, comme schématisé sur la figure 1.

Au moins le moteur 5 peut bien entendu être un motoréducteur « couple », et/ou il peut être assisté d'un variateur de fréquences ou de tout autre asservissement électronique permettant de programmer des rampes de décélération ou d'accélération afin d'adoucir le fonctionnement.

Un tel variateur de fréquence permet aussi de stopper la sonde en fond de benne et en commander la remontée. De même, on peut aussi obtenir un arrêt en position haute avec un tel variateur et/ou au moyen d'une sonde électromagnétique.

Outre, comme déjà dit, les avantages d'assemblage obtenus du fait du nombre réduit de pièces, l'esthétique de l'ensemble et la bonne protection du moteur 5, on comprend que le poids de ce dernier favorise, comme déjà dit aussi, la pénétration de la sonde 3 dans le produit à prélever.

## Revendications

1. Dispositif de prélèvement de matières granuleuses ou pulvérulentes comportant un mât (1) sur lequel est articulé au moins un bras (2) dont l'extrémité libre porte une sonde (3) de prélèvement tandis que ledit bras est entraîné en mouvement par la combinaison de deux moteurs (4,5) distincts munis chacun d'un arbre de sortie, l'un (4) des moteurs, dit de rotation, étant monté de manière à avoir son arbre de sortie, d'une part, sensiblement parallèle au mât et, d'autre part, solidaire en rotation avec ledit bras, et l'autre moteur (5), dit de montée/descente, ayant son arbre de sortie disposé dans un plan sensiblement perpendiculaire audit mât (1), **caractérisé en ce que** le moteur (5) de montée/descente est monté de manière solidaire avec le bras (2) tandis que son arbre de sortie est monté de manière bloqué en rotation axiale par rapport au mât de telle manière que ledit moteur (5) peut osciller dans un plan sensiblement parallèle au mât, ou passant par celui-ci, en entraînant le bras (2) dans son mouvement.

2. Dispositif de prélèvement selon la revendication 1 et dans lequel le moteur (4) de rotation est monté fixement sur le mât et entraîne par son arbre de sortie un berceau (6) dans lequel est monté le moteur (5) de montée/descente, **caractérisé en ce que** l'arbre de sortie du moteur (5) de montée/descente est bloqué en rotation dans ledit berceau (6) de telle sorte que ledit moteur peut osciller dans le berceau autour de son arbre de sortie ainsi bloqué.

3. Dispositif de prélèvement selon la revendication 2, **caractérisé en ce que** l'arbre de sortie du moteur de montée/descente est bloqué en rotation au moyen de brides (8a,8b) montées sur le berceau (6) de façon légèrement flottante.

4. Dispositif de prélèvement selon la revendication 3, **caractérisé en ce que** les brides (8a,8b) de blocage de l'arbre de sortie du moteur (5) de montée/descente sont montées sur ledit berceau (6) de manière flottante au moyen de semelles (9a,9b) qui sont solidarisées aux brides et qui sont fixées sur le berceau par des boulons ajustés de manière à assurer un jeu longitudinal et latéral des semelles par rapport audit berceau.

5. Dispositif de prélèvement selon l'une des revendications 1 à 4, **caractérisé en ce que** le moteur (5) de montée/descente est disposé de manière sensiblement parallèle à l'axe longitudinal d'au moins une partie du bras (2).

6. Dispositif selon l'une des revendications 1 à 5, **caractérisé en ce que** le bras (2) est fixé en partie sur une plaque (10) solidarisée au moteur (5) de montée/descente, ladite plaque et au moins une partie dudit bras et dudit moteur étant recouvertes par un carter (11).

7. Dispositif de prélèvement selon l'une des revendications 1 à 6², **caractérisé en ce que** le bras (2) est constitué par un conduit qui sert de conduit de transport par aspiration du produit prélevé.

8. Dispositif de prélèvement selon l'une des revendications 1 à 7, **caractérisé en ce que** des butées (12,13) sont prévues pour limiter l'amplitude angulaire du mouvement oscillant du moteur (5) de montée/descente.

## Claims

1. Device for sampling granular or powdery materials comprising a mast (1) on which is articulated at least one arm (2) the free end of which carries a sampling probe (3) while said arm is entrained in movement by the combination of two separate motors (4, 5) each provided with an output shaft, one (4) of the motors, called the rotating motor, being mounted so as to have its output shaft firstly substantially parallel to the mast and secondly locked in rotation with said arm, and the other motor (5), called the raising/lowering motor, having its output shaft disposed in a plane substantially perpendicular to said mast (1), **characterised in that** the raising/lowering motor (5) is mounted locked with the arm (2) while its output shaft is mounted blocked in axial rotation in relation to the mast such that said motor (5) can turn in a plane substantially parallel to the mast, or passing through the latter, entraining the arm (2) in its movement.

2. Sampling device according to claim 1 and in which the rotating motor (4) is mounted fixed on the mast and through its output shaft entrains a cradle (6) in which is mounted the raising/lowering motor (5), **characterised in that** the output shaft of the raising/lowering motor (5) is blocked in rotation in said cradle (6) such that said motor can turn in the cradle about its output shaft thus blocked.

3. Sampling device according to claim 2, **characterised in that** the output shaft of the raising/lowering motor is blocked in rotation by means of clamps (8a, 8b) mounted on the cradle (6) in a slightly floating manner.

4. Sampling device according to claim 3, **characterised in that** the clamps (8a, 8b) for blocking the output shaft of the raising/lowering motor (5) are mounted on said cradle (6) in a floating manner by means of base plates (9a, 9b) which are locked to the clamps and fixed to the cradle by bolts fitted so as to provide longitudinal and lateral play for the base plates in relation to said cradle.

5. Sampling device according to one of claims 1 to 4, **characterised in that** the raising/lowering motor (5) is disposed substantially parallel to the longitudinal axis of at least one portion of the arm (2).

6. Device according to one of claims 1 to 5, **characterised in that** the arm (2) is fixed in part on a plate (10) locked to the raising/lowering motor (5), said plate and at least a portion of said arm and said motor being covered by a housing (11).

7. Sampling device according to one of claims 1 to 6, **characterised in that** the arm (2) is constituted by a pipe which serves as pipe for transporting the product being sampled by suction.

8. Sampling device according to one of claims 1 to 7, **characterised in that** stops (12, 13) are provided to limit the angular amplitude of the turning movement of the raising/ lowering motor (5).

## Patentansprüche

1. Vorrichtung zur Entnahme granulärer oder pulveriger Materialproben, umfassend einen Mast (1) an dem zumindest ein Arm (2) befestigt ist, an dessen freiem Ende eine Entnahmesonde (3) angebracht ist, wobei der Arm durch eine Kombination von zwei unterschiedlichen Motoren (4,5) bewegt wird, von denen jeder eine Antriebswelle aufweist, wobei der eine Motor (4), genannt Rotationsmotor, so montiert ist, dass seine Antriebswelle einerseits im Wesentlichen parallel zu dem Mast liegt und andererseits rotationsfest mit dem Arm verbunden ist, und wobei die Antriebswelle des anderen Motor (5), genannt Hebe-/Senkmotor, in einer Ebene liegt, die im Wesentlichen senkrecht zu dem Mast (1) steht, **gekennzeichnet durch** die Montage des Hebe-/Senkmotors (5), die in fester Fixierung mit dem Arm (2) erfolgt, wobei die Antriebswelle des Hebe-/Senkmotors (5) so montiert ist, dass eine axiale Rotation bezüglich des Mastes verhindert ist und sich **dadurch** der Motor (5) in einer Ebene, die im Wesentlichen parallel zum Mast liegt, hin- und herbewegen kann oder über den Mast hinausragen kann, wobei der Motor (5) den Arm (2) in seiner Bewegung mitführt.

2. Vorrichtung zur Entnahme nach Anspruch 1 und in der der Rotationsmotor (4) fest mit dem Mast verbunden montiert ist und mit seiner Antriebswelle einen Aufbau (6) bewegt, in dem der Hebe-/Senkmotor (5) montiert ist, **dadurch gekennzeichnet, dass** die Antriebswelle des Hebe-/Senkmotors (5) in dem Aufbau (6) an einer Rotation gehindert ist, so dass der genannte Motor in dem Aufbau sich um seine dergestalt blockierte Antriebswelle hin- und herbewegen kann.

3. Vorrichtung zur Entnahme nach Anspruch 2, **dadurch gekennzeichnet, dass** die Antriebswelle des Hebe-/Senkmotors durch Halterungen (8a, 8b), die auf dem Aufbau (6) mit etwas Bewegungsfreiheit montiert sind, an einer Rotation gehindert wird.

4. Vorrichtung zur Entnahme nach Anspruch 3, **dadurch gekennzeichnet, dass** die Halterungen (8a, 8b), die der Verhinderung der Rotation der Antriebswelle des Hebe-/Senkmotors dienen, auf dem Aufbau (6) mittels zweier Seitflansche (9a, 9b) mit etwas Bewegungsfreiheit fixiert sind, wobei letztere Seitflansche mit den Halterungen fest verbunden sind und auf dem Aufbau mittels Bolzen so montiert sind, dass sie zu dem Aufbau longitudinales und laterales Spiel haben.

5. Vorrichtung zur Entnahme nach einem der Ansprüche 1 bis 4, **dadurch gekennzeichnet, dass** der Hebe-/Senkmotor (5) im Wesentlichen parallel zu der Längsachse von zumindest einem Abschnitt des Arms angebracht ist.

6. Vorrichtung zur Entnahme nach einem der Ansprüche 1 bis 5, **dadurch gekennzeichnet, dass** der Arm (2) in einem Abschnitt an einer Platte (10) fixiert ist, die mit dem Hebe-/Senkmotor fest verbunden ist, wobei die Platte und zumindest ein Abschnitt des Arms und des Motors von einem Gehäuse umgeben sind.

7. Vorrichtung zur Entnahme nach einem der Ansprüche 1 bis 6, **dadurch gekennzeichnet, dass** der Arm (2) aus einer Leitung besteht, die als Leitung für den Transport mittels Ansaugen des entnommenen Materials dient.

8. Vorrichtung nach einem der Ansprüche 1 bis 7, **dadurch gekennzeichnet, dass** Begrenzer (12, 13) vorgesehen sind, die der Einschränkung des Bewegungswinkels des Hebe-/Senkmotors (5) dienen.
